Europäisches Patentamt

(19) European Patent Office

Office européen des brevets

(11) Veröffentlichungsnummer: **0 037 001**
**B1**

(12) # EUROPÄISCHE PATENTSCHRIFT

(45) Veröffentlichungstag der Patentschrift:
**14.12.83**

(21) Anmeldenummer: **81101943.9**

(22) Anmeldetag: **16.03.81**

(51) Int. Cl.³: **H 02 P 13/18**

(54) **Wechselrichteranordnung.**

(30) Priorität: **28.03.80 DE 3012232**
**01.08.80 DE 3029278**

(43) Veröffentlichungstag der Anmeldung:
**07.10.81 Patentblatt 81/40**

(45) Bekanntmachung des Hinweises auf die Patenterteilung:
**14.12.83 Patentblatt 83/50**

(84) Benannte Vertragsstaaten:
**AT CH DE GB IT LI NL SE**

(56) Entgegenhaltungen:
**FR - A - 2 104 440**
**US - A - 3 321 694**
**US - A - 3 959 720**

**SIEMENS POWER ENGINEERING, Band 1, Nr. 2,
Februar 1979, Seiten 57-61 Erlangen, DE. T. SCHLEGEL
et al.: "Voltage clocking of starting converters"**

(73) Patentinhaber: **SIEMENS AKTIENGESELLSCHAFT,
Berlin und München Wittelsbacherplatz 2,
D-8000 München 2 (DE)**

(72) Erfinder: **Forstbauer, Wilhelm, Dr., Nürnberger
Strasse 76, D-8520 Erlangen (DE)**
Erfinder: **Kroworsch, Hans-Peter, Dipl.-Ing., v.
Bünau-Strasse 2, D-8552 Heroldsbach (DE)**
Erfinder: **Küller, Herbert, Neuweiherstrasse 34,
D-8523 Baiersdorf (DE)**
Erfinder: **Strop, Jürgen, Dipl.-Ing., Lindenstrasse 14,
D-8521 Langensendelbach (DE)**

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

Wechselrichteranordnung

Die Erfindung betrifft eine Wechselrichteranordnung zur Erzeugung einer dreiphasigen Ausgangswechselspannung mit drei selbstgeführten einphasigen Wechselrichtern, die eingangsseitig parallel an einer gemeinsamen Gleichspannungsquelle liegen und ausgangsseitig an Tiefpassfilter und an eine Transformatoranordnung angeschlossen sind.

Es ist bekannt, dass eine Wechselrichteranordnung zum Aufbau eines Dreiphasensystems aus drei einphasigen Wechselrichtern zusammengesetzt werden kann, deren Steuerimpulse aus einem Taktgeber mit der dreifachen Ausgangsfrequenz phasenrichtig ausgezählt werden. Eine Wechselrichteranordnung mit Drehstromausgang lässt sich auch mit einer Dreiphasenbrückenschaltung ausführen (Hoffmann/Stocker «Thyristor-Handbuch», 1965, Seite 252). Zur Verminderung des Oberschwingungsgehalts werden Tiefpassfilter eingesetzt (a.a.O. Bild 169).

Bei einem Tiefpassfilter besteht eine belastungsabhängige Betrags- und Phasenänderung zwischen Eingangs- und Ausgangsspannung. Diese Änderung wird um so grösser, je grösser die Längsinduktivität des Tiefpassfilters ist. Die Längsinduktivität eines Wechselrichterfilters soll jedoch aus Gründen der Kurzschlussfestigkeit des Wechselrichters und zur Erzielung eines kleinen Klirrfaktors der Filterausgangsspannung möglichst gross gewählt werden. Bei Schiefbelastung eines Dreiphasensystems verursachen die Längsinduktivitäten der Tiefpassfilter ein nach Betrag und Phase unsymmetrisches Drehspannungssystem.

Der Erfindung liegt die Aufgabe zugrunde, eine Wechselrichteranordnung zu schaffen, bei der eine dreiphasige symmetrische Ausgangswechselspannung auch bei Schieflast gewährleistet ist.

Erfindungsgemäss wird diese Aufgabe durch folgende Merkmale gelöst:

a) Zur Bildung der dreiphasigen Ausgangswechselspannung sind entweder die Einphasen-Wechselrichter jeweils über ein wechselrichterseitiges Tiefpassfilter an eine dreiphasige Transformatoranordnung angeschlossen oder die Einphasen-Wechselrichter sind über eine dreiphasige Transformatoranordnung an jeweils ein netzseitiges Tiefpassfilter angeschlossen, wobei in beiden Fällen die netzseitigen Wicklungen der Transformatoranordnung in einer Sternschaltung mit herausgeführtem Sternpunkt angeordnet sind,

b) jeder Einphasen-Wechselrichter wird jeweils von einer eigenen Pulssteuereinrichtung mit einer vektororientierten Regeleinrichtung und einem Steuersatz mit Zündimpulsen gesteuert,

c) es ist ein Vektoroszillator zur Erzeugung eines dreiphasigen symmetrischen Systems von Referenzvektoren vorgesehen,

d) die vektororientierten Regeleinrichtungen, denen jeweils als Führungsgrösse ein vom Vektoroszillator erzeugter Referenzvektor und als Regelgrösse ein aus dem Messwert der Ausgangswechselspannung der zugehörigen Phase ermittelter Vektor der Ausgangsspannung zugeführt wird, ermitteln eine Betragssteuerspannung und eine Phasensteuerspannung für die zugehörigen Steuersätze in der Weise, dass der Phasenspannungsvektor in Übereinstimmung mit dem jeweiligen Führungsvektor gehalten wird.

Die erfindungsgemässe Wechselrichteranordnung enthält drei unabhängig gesteuerte Einphasen-Wechselrichter mit den zugehörigen Pulssteuereinrichtungen, Tiefpassfiltern und einer Transformatoranordnung. Durch die netzseitige Sternschaltung der Wicklungen der Transformatoranordnung wird das ausgangsseitige Dreiphasensystem gebildet. Die Symmetrierung der dreiphasigen Ausgangswechselspannung erfolgt nicht durch Vorgabe eines durch eine entsprechende Schaltung symmetrierten Pulsrasters, sondern erfindungsgemäss durch vektororientierte Regeleinrichtungen, die die Ausgangsspannungen jedes der drei Einphasen-Wechselrichter in Polarkoordinaten stellen. Jede vektororientierte Regeleinrichtung verschiebt das unabhängige Impulsraster des zugehörigen Einphasen-Wechselrichters so lange, bis dessen Ausgangsspannungsvektor phasengleich ist mit einem durch den Vektoroszillator vorgegebenen Referenzvektor. Da der Vektoroszillator ein symmetrisches System von Referenzvektoren vorgibt, ist das System der Ausgangswechselspannungen der Wechselrichteranordnung winkelsymmetrisch. Die Betragssymmetrierung der dreiphasigen Ausgangswechselspannung erfolgt für jeden Einphasen-Wechselrichter unabhängig durch ein in das verschiebbare Pulsraster eingefügtes Pulsmodulationsverfahren. Phasenstellung und Betragsstellung jedes Einphasen-Wechselrichters sind durch unabhängige Betrags- und Phasenregelkreise voneinander entkoppelt.

Ausführungsbeispiele der Erfindung sind in der Zeichnung dargestellt und wird im folgenden näher beschrieben. Es zeigen:

Fig. 1 ein Blockschaltbild einer erfindungsgemässen Wechselrichteranordnung,

Fig. 2 eine vektorielle Darstellung von Strömen und Spannungen eines Einphasen-Wechselrichters bei unterschiedlicher Belastung,

Fig. 3 ein Ausführungsbeispiel einer vektororientierten Regeleinrichtung mit einer Regelung in kartesischen Koordinaten,

Fig. 4 ein Ausführungsbeispiel einer vektororientierten Regeleinrichtung mit einer Regelung in Polarkoordinaten,

Fig. 5 ein Schaltungsbeispiel eines Vektordrehers,

Fig. 6 ein Schaltungsbeispiel eines Vektoridentifizierers, der zu einer eingegebenen Spannung eine um 90° phasenverschobene Spannung als orthogonale Komponente des Spannungsvektors bildet,

Fig. 7 ein Schaltungsbeispiel einer ersten Ausführungsform eines Koordinatenwandlers,

Fig. 8 ein Schaltungsbeispiel einer weiteren Ausführungsform eines Koordinatenwandlers, der eine in kartesischen Koordinaten eingegebene Grösse in Polarkoordinaten umwandelt,

Fig. 9 ein Schaltungsbeispiel einer vereinfachten Ausführungsform eines Koordinatenwandlers,

Fig. 10 ein Schaltungsbild eines Vektoroszillators zur Erzeugung eines dreiphasigen Systems von Referenzvektoren,

Fig. 11 ein Blockschaltbild einer anderen Ausführungsform einer erfindungsgemässen Wechselrichteranordnung.

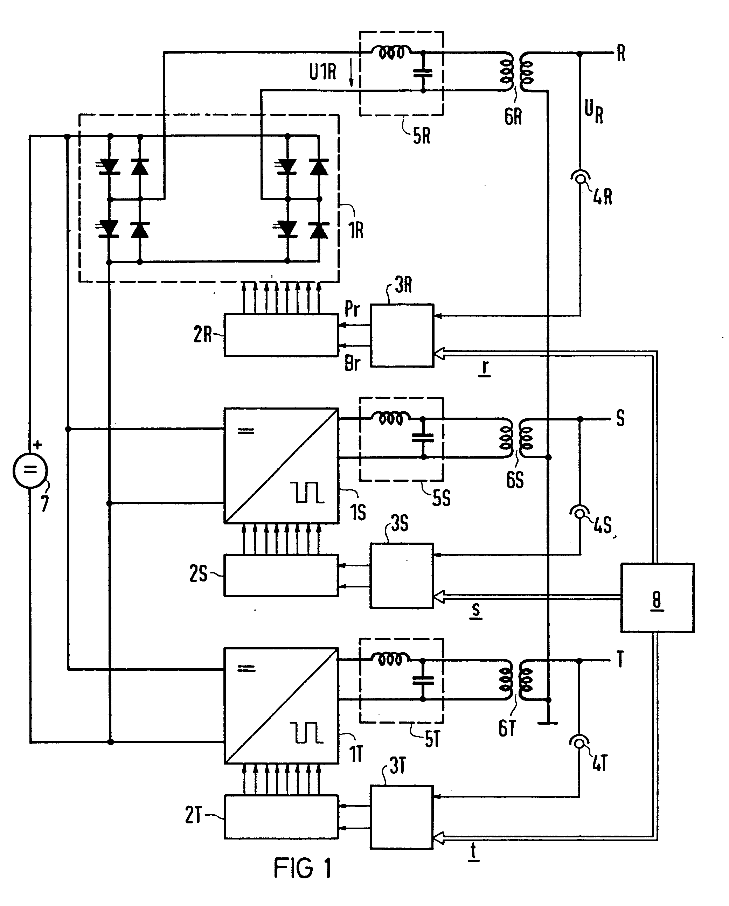

Fig. 1 zeigt eine erfindungsgemässe Wechselrichteranordnung mit drei einphasigen selbstgeführten Wechselrichtern 1R, 1S, 1T. Die Schaltung der einphasigen Wechselrichter ist schematisch nur beim Wechselrichter 1R dargestellt. Die Schaltung enthält zwei Stränge mit je zwei Hauptstrom-Brückenzweigen mit steuerbaren Hauptventilen, die vereinfacht als zünd- und löschbare Ventile gezeichnet sind, sowie zwei weitere Stränge mit jeweils den steuerbaren Hauptventilen antiparallel geschalteten Rückarbeitsdioden.

Die drei Einphasen-Wechselrichter 1R, 1S, 1T liegen gleichstromseitig parallel an einer Gleichspannungsquelle 7, gegebenenfalls über ein LC-Glied. Als Gleichspannungsquelle kann beispielsweise bei einer Bordstromversorgung eine Batterie oder bei einer Umrichteranordnung ein Gleichstrom- oder Gleichspannungs-Zwischenkreis vorgesehen sein, der von einer Gleichrichterschaltung gespeist wird.

Den Einphasen-Wechselrichtern 1R, 1S, 1T ist jeweils ein Tiefpassfilter 5R, 5S, 5T nachgeschaltet. Die Tiefpassfilter, die in Art eines Ersatzschaltbildes mit Längsinduktivität und Querkapazität dargestellt sind, sind auf charakteristische Oberschwingungen in der pulsförmigen Ausgangsspannung der Einphasen-Wechselrichter abgestimmt. Die drei Tiefpassfilter 5R, 5S, 5T sind jeweils an die stromrichterseitigen Wicklungen einer Transformatoranordnung angeschlossen. Die netzseitigen Wicklungen der Transformatoranordnung sind in Stern geschaltet, und der Sternpunkt M ist herausgeführt. An den Klemmen R, S, T wird die gewünschte dreiphasige Ausgangswechselspannung abgegriffen, beispielsweise als Bordnetzspannung. Durch die Transformatoranordnung werden die Ausgangsspannungen der Wechselrichter an das gewünschte Spannungsniveau des Drehstromnetzes angepasst und das Drehstromnetz galvanisch von der Gleichspannungsquelle 7 getrennt.

Im Ausführungsbeispiel der Fig. 1 sind die Ausgänge der Einphasen-Wechselrichter 1R, 1S, 1T jeweils über ein wechselrichterseitiges Tiefpassfilter 5R, 5S, 5T an die wechselrichterseitigen Wicklungen der Transformatoranordnung angeschlossen. Die Transformatoranordnung wird daher mit sinusförmigen Strömen und Spannungen mit geringem Oberschwingungsgehalt belastet. Es entstehen daher in der Transformatoranordnung keine Eisenverluste und keine Kupferzusatzverluste durch Oberschwingungen. Auch bei Schieflast wird die Transformatoranordnung mit einem symmetrischen Spannungssystem gespeist.

In der Darstellung der Fig. 1 besteht die Transformatoranordnung aus drei Einphasen-Transformatoren 6R, 6S, 6T. Es ist jedoch auch möglich, einen Drehstromtransformator einzusetzen.

Jeder Einphasen-Wechselrichter 1R, 1S, 1T wird jeweils von einer eigenen Pulssteuereinrichtung gesteuert. Jede Pulssteuereinrichtung umfasst jeweils einen Steuersatz 2R bzw. 2S bzw. 2T und eine vorgeschaltete vektororientierte Regeleinrichtung 3R bzw. 3S bzw. 3T. Die vektororientierten Regeleinrichtungen bilden jeweils eine Betragssteuerspannung, die dem Betragssteuereingang Br des zugehörigen Steuersatzes zugeführt wird, sowie eine Phasensteuerspannung, die dem Phasensteuereingang Pr des zugehörigen Steuersatzes zugeführt wird. Die vektororientierten Regeleinrichtungen 3R, 3S, 3T sind voneinander unabhängig, so dass die einzelnen Ausgangsspannungen der Einphasen-Wechselrichter in Betrag und Phasenlage unabhängig voneinander in Polarkoordinaten stellbar sind. Die Steuersätze 2R, 2S, 2T erzeugen die eigentlichen Zündimpulse für die gesteuerten Ventile der zugehörigen Wechselrichter. Die entsprechenden Verbindungen zu den gesteuerten Ventilen der Wechselrichter sind schematisch als Pfeile dargestellt.

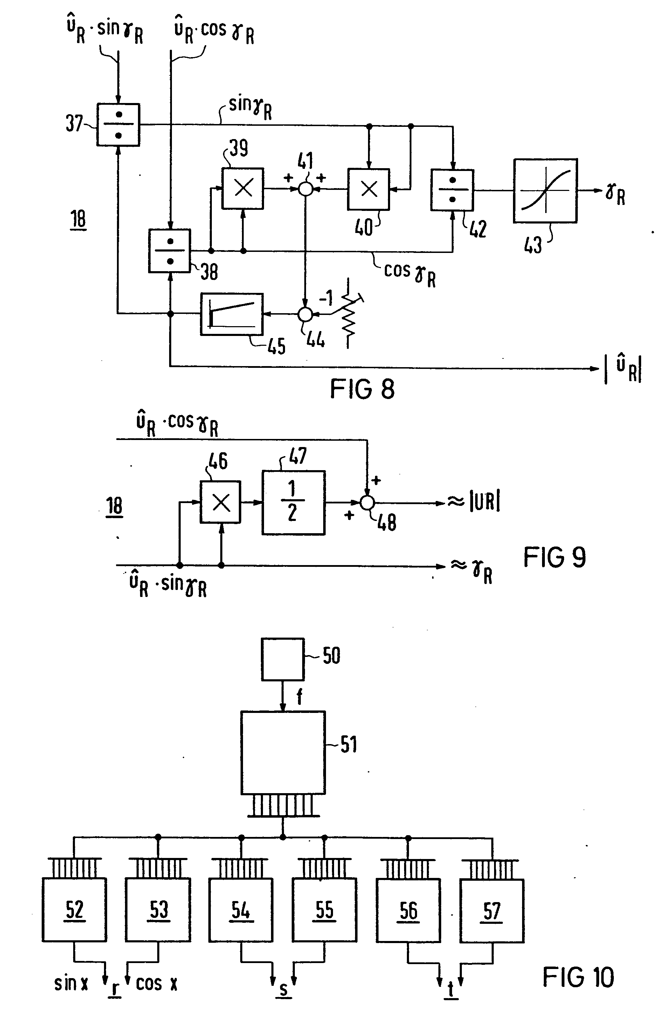

Bei einer Belastung der Wechselrichteranordnung verursacht die Längsreaktanz der Tiefpassfilter eine vektorielle Spannungsänderung. Bei Schieflast entstehen unterschiedliche vektorielle Spannungsänderungen in den einzelnen Phasen des dreiphasigen Systems der Ausgangswechselspannungen. Um die dreiphasigen Ausgangswechselspannungen bei unsymmetrischer Belastung zu symmetrieren, halten die vektororientierten Regeleinrichtungen 3R, 3S, 3T den Vektor der jeweiligen Phasenspannung des Drehstromnetzes R, S, T in Übereinstimmung mit Referenzvektoren $\underline{r}$, $\underline{s}$, $\underline{t}$, die von einem Vektoroszillator 8 (Fig. 10) als dreiphasiges symmetrisches System erzeugt werden. Die Referenzvektoren $\underline{r}$, $\underline{s}$, $\underline{t}$ werden den vektororientierten Regeleinrichtungen 3R, 3S, 3T als Führungsgrössen zugeführt. Als Regelgrössen wird den vektororientierten Regeleinrichtungen 3R bzw. 3S bzw. 3T jeweils ein Messwert der Ausgangswechselspannung der zugehörigen Phasen R bzw. S bzw. T zugeführt, der von Spannungsmesswandlern 4R bzw. 4S bzw. 4T erfasst wird.

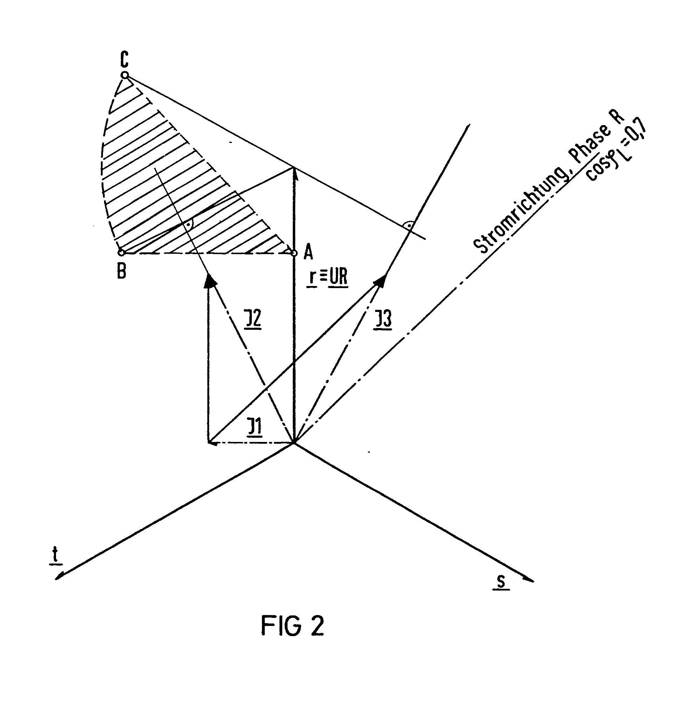

Fig. 2 dient zur Erläuterung der erfindungsgemässen Führung des Einphasen-Wechselrichters 1R der Phase R in einer vektoriellen Darstellung mit den symmetrischen Referenzvektoren $\underline{r}$, $\underline{s}$, $\underline{t}$.

Im Leerlauf wird der Einphasen-Wechselrichter 1R aufgrund der Querkapazität des Tiefpassfilters 5R mit einem gegenüber der Ausgangsspannung $U_R$ voreilenden Strom J1 belastet. Der Vektor der Wechselrichterausgangsspannung endet aufgrund des Spannungsabfalls in der Längsreaktanz des Tiefpassfilters im Punkt A.

Bei einer rein ohmschen Belastung entsteht der Stromvektor J2. Der Vektor der Wechselrichterausgangsspannung endet jetzt im Punkt B.

Bei einer ohmisch-induktiven Belastung mit einem Lastwinkel $\cos\varphi = 0{,}7$ wird der Wechselrichter mit dem Stromvektor J3 belastet. Der Vektor der Wechselrichterausgangsspannung endet in Punkt C.

Durch die drei Punkte A, B, C wird eine Ortsfläche aufgespannt, innerhalb der sich der Vektor der Wechselrichterausgangsspannung innerhalb der angegebenen Belastungsgrenzen von $\cos\varphi = 1$ bis $\cos\varphi = 0{,}7$ bewegt, wenn der Vektor der Ausgangswechselspannung mit dem Referenzvektor $\underline{r}$ identisch bleiben soll.

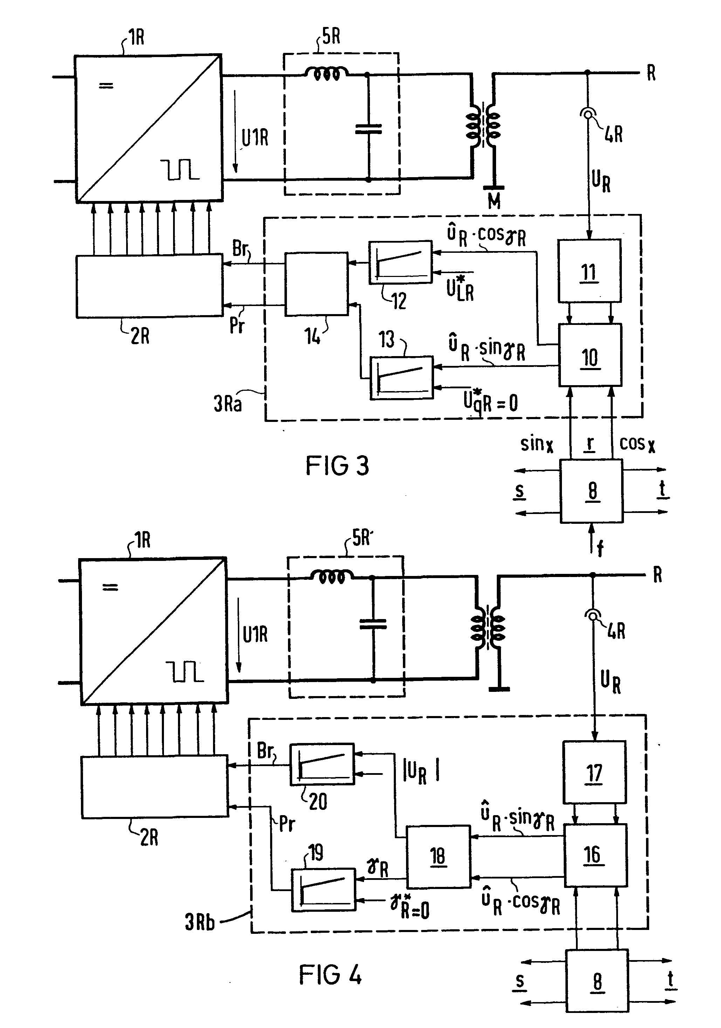

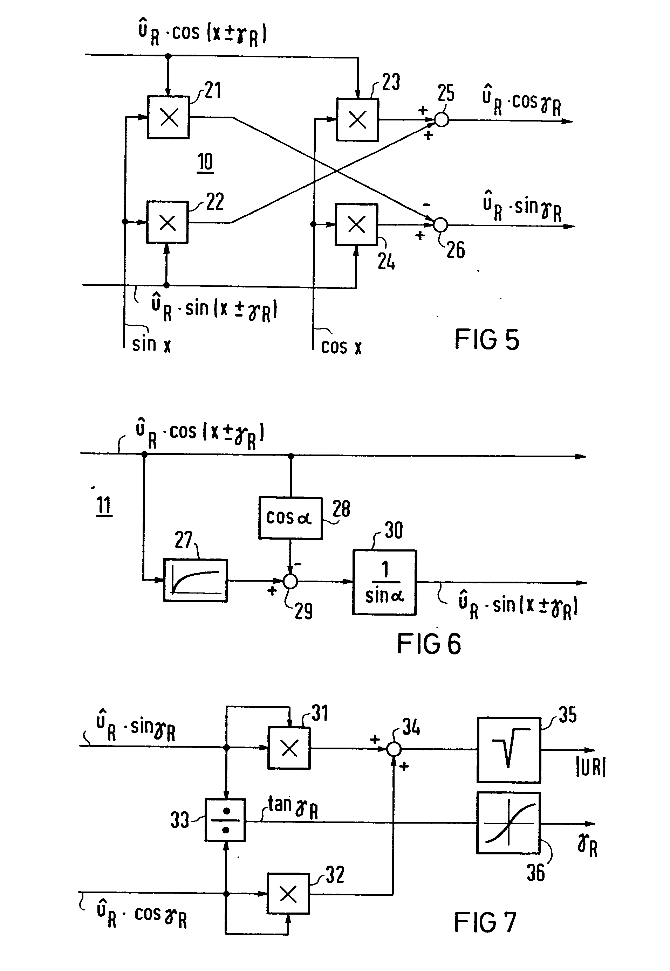

Fig. 3 zeigt eine schematische Darstellung einer vektororientierten Regeleinrichtung 3Ra zur polaren Stellung des Vektors der Ausgangsspannung des Einphasen-Wechselrichters 1R, bei der eine Regelung in kartesischen Koordinaten vorgenommen wird. Der Vektoroszillator 8 erzeugt aus einer Taktfrequenz f die Referenzvektoren $\underline{r}$, $\underline{s}$, $\underline{t}$ in Form ihrer Sinus- und Kosinuskomponenten. Die orthogonalen Komponenten sin x, cos x des Referenzvektors $\underline{r}$ werden einem Vektordreher 10 (Fig. 5) zugeführt. Die vom Spannungsmesswandler 4R erfasste Ausgangswechselspannung $U_R$ der Phase R wird einem Vektoridentifizierer 11 (Fig. 6) zugeführt. Betrachtet man den Spannungsmesswert als $\hat{u}_R \cdot \cos(x \pm \gamma_R)$, so bildet der Vektoridentifizierer 11 die hierzu orthogonale Grösse $\hat{u}_R \cdot \sin(x \pm \gamma_R)$. Hierbei ist $\gamma_R$ eine angenommene Phasenabweichung des Vektors $\underline{U}_R$ der Ausgangswechselspannung gegenüber dem Referenzvektor $\underline{r}$. Im Vektordreher 10 wird durch Projektion der Komponenten der Ausgangswechselspannung auf den Referenzvektor $\underline{r}$ eine Demodulation der Wechselspannungsgrössen vorgenommen und es werden die Gleichspannungsgrössen $\hat{u}_R \cdot \cos\gamma_R$ und $\hat{u}_R \cdot \sin\gamma_R$ als repräsentative Führungsgrössen gebildet. Die Gleichspannungsgrösse $\hat{u}_R \cdot \cos\gamma_R$ ist die durch die fiktive Phasenabweichung des Vektors der Ausgangswechselspannung von Referenzvektor $\underline{r}$ beeinflusste Längskomponente und die Gleichspannungsgrösse $\hat{u}_R \cdot \sin\gamma_R$ die zugehörige Querkomponente.

Die Gleichspannungsgrösse $\hat{u}_R \cdot \cos\gamma_R$ wird einem Längsspannungsregler 12 und die Gleichspannungsgrösse $\hat{u}_R \cdot \sin\gamma_R$ wird einem Querspannungsregler 13 jeweils als Regelgrösse zugeführt. Der Längsspannungsregler 12 erhält als Führungsgrösse $U^*_{LR}$ einen konstanten Spannungsbetrag. Der Querspannungsregler 13 erhält als Führungsgrösse $U^*_{qR} = 0$ vorgegeben.

Die Ausgangssignale des Längsspannungsreglers 12 und des Querspannungsreglers 13, die die Stellgrössen in einem kartesischen Koordinatensystem darstellen, werden in einem Koordinatenwandler 14 in polare Grössen umgeformt und als Betragssteuerspannung auf den Betragssteuereingang Br, bzw. als Phasensteuerspannung auf den Phasensteuereingang Pr des Steuersatzes 2R aufgeschaltet. Die Betragssteuerspannung bestimmt die Amplitude der Wechselrichterausgangsspannung. Die Phasensteuerspannung bestimmt den Phasenwinkel zwischen der Ausgangswechselspannung der Phasen R, die mit dem Referenzvektor $\underline{r}$ übereinstimmt, und der Wechselrichterausgangsspannung.

Fig. 4 zeigt eine schematische Darstellung einer vektororientierten Regeleinrichtung 3Rb zur polaren Stellung des Vektors der Wechselrichter-Ausgangsspannung des Einphasen-Wechselrichters 1R, bei der eine Regelung in Polarkoordinaten vorgenommen wird. Die vom Vektoroszillator 8 gebildeten orthogonalen Komponenten sinx, cosx des Referenzvektors $\underline{r}$ werden einem Vektordreher 16 zugeführt, der den gleichen Schaltungsaufbau aufweisen kann wie der Vektordreher 10. Die vom Spannungsmesswandler 4R erfasste Ausgangswechselspannung $U_R$ der Phase R wird einem Vektoridentifizierer 17 zugeführt, der den gleichen Schaltungsaufbau aufweisen kann wie der Vektoridentifizierer 11. Im Vektordreher 16 wird durch Projektion der Winkelkomponenten $\hat{u}_R \cdot \sin(\pm \gamma_R)$ und $\hat{u}_R \cdot \cos(x \pm \gamma_R)$ der Ausgangswechselspannung $U_R$ auf die orthogonalen Komponenten sinx, cosx des Referenzvektors r eine Demodulation der Wechselspannungsgrössen vorgenommen und die Gleichspannungsgrössen $\hat{u}_R \cdot \cos\gamma_R$ und $\hat{u}_R \cdot \sin\gamma_R$ als repräsentative Regelgrössen gebildet. Diese beiden Gleichspannungsgrössen sind Grössen in einem kartesischen Koordinatensystem. Sie werden in einem Koordinatenwandler 18 (Fig. 7, 8, 9) in die Grössen $|U_R|$ und $\gamma_R$ in einem Polarkoordinatensystem umgewandelt. Die Betragsgrösse $|U_R|$ wird einem Betragsregler 20 als Regelgrösse und die Winkelgrösse $\gamma_R$ wird einem Winkelregler 19 als Regelgrösse zugeführt. Der Betragsregler 20 erhält als Führungsgrösse einen konstanten Spannungswert. Der Winkelregler 19 erhält als Führungsgrösse einen Spannungswert für $\gamma^*_R = 0$. Die Ausgangsspannung des Betragsreglers 20 ist die Betragssteuerspannung. Sie wird dem Betragssteuereingang Br des Steuersatzes 2R zugeführt und bestimmt die Amplitude der Wechselrichterausgangsspannung der Phase R. Die Ausgangsspannung des Winkelreglers 19 ist die Phasensteuerspannung. Sie wird dem Phasensteuereingang Pr des Steuersatzes 2R zugeführt und bestimmt den Winkel zwischen der Ausgangswechselspannung $U_R$ der Phase R und der Wechselrichterausgangsspannung U1R des Einphasen-Wechselrichters 1R.

Fig. 5 zeigt den prinzipiellen Aufbau eines Vektordrehers 10. Der Vektordreher 10 enthält vier Multiplizierer 21, 22, 23, 24, einen als Addierer beschalteten Summierverstärker 25 und einen als Differenzbildner beschalteten Summierverstärker 26. Den Eingängen des Multiplizierers 21 wird die Komponente $\hat{u}_R \cdot \cos(x \pm \gamma_R)$ der Ausgangswechselspannung und die Winkelkomponente sin x des Referenzvektors zugeführt. Den Eingängen des Multiplizierers 22 wird die Komponente $\hat{u}_R \cdot \sin(x \pm \gamma_R)$ der Ausgangswechselspannung und ebenfalls die Komponente sin x des Referenzvektors $\underline{r}$ zugeführt. Den Eingängen des Multiplizierers 23 wird die Komponente $\hat{u}_R \cdot \cos(x \pm \gamma_R)$ der Ausgangswechselspannung und die Winkelkomponente cos x des Referenzvektors zugeführt. Dem Multiplizierer 24 wird die Komponente $\hat{u}_R \cdot \sin(x \pm \gamma_R)$ der Ausgangswechselspannung und ebenfalls die Komponente cos x des Referenzvektors zugeführt. Die Ausgangsspannung der Multiplizierer 22 und 23 werden im Summierverstärker 25 addiert und man erhält die demodulierte Regelgrösse für die Längsspannung $\hat{u}_R \cdot \cos\gamma_R$. Im Differenzbildner 26 wird die Ausgangsspannung des Multiplizierers 21 von der Ausgangsspannung des Multiplizierers 24 abgezogen und man erhält die demodulierte Regelgrösse für die Querspannung. Der Vektordreher 16 hat den gleichen Aufbau.

Fig. 6 zeigt den prinzipiellen Aufbau des Vektoridentifizierers 11. Die Eingangsgrösse $\hat{u}_R \cdot \cos(x \pm \gamma_R)$ wird über ein Verzögerungsglied 27 von erster Ordnung geführt, dessen Ausgangsspannung einem Differenzbildner 29 zugeführt wird. Die Eingangsspannung $\hat{u}_R \cdot \cos(x \pm \gamma_R)$ wird weiterhin in einem Verstärker 28 mit einem Faktor cos $\alpha$ gewichtet und dem Differenzbildner 29 mit negativem Vorzeichen zugeführt. Die Ausgangsspannung des Differenzbildners 29 wird in einem weiteren Verstärker 30 mit einem Faktor $\frac{1}{\sin\alpha}$ gewichtet. Die Ausgangsspannung des weiteren Verstärkers stellt die gewünschte Sinuskomponente $\hat{u}_R \cdot \sin(x \pm \gamma_R)$ zur eingangsseitigen Kosinuskomponente $\hat{u}_R \cdot \cos(x \pm \gamma_R)$ dar. Der Vektoridentifizierer 17 hat den gleichen Aufbau.

Fig. 7 zeigt den prinzipiellen Schaltungsaufbau bei der Ausführungsform eines Koordinatenwandlers 18 in der vektororientierten Regeleinrichtung 3Rb der Fig. 4. Der Koordinatenwandler 18 enthält zwei als Quadrierer geschaltete Multiplizierer 31 und 32, einen Dividierer 33, einen Summierverstärker 34, einen Radizierer 35 und einen Funktionsgeber 36 zur Nachbildung der arctan-Funktion. Die Winkelkomponente $\hat{u}_R \cdot \sin\gamma_R$ wird dem Dividendeneingang des Dividierers 33 zugeführt, sowie im Multiplizierer 31 quadriert. Die Winkelkomponente $\hat{u}_R \cdot \cos\gamma_R$ wird dem Divisoreingang des Dividierers 33 zugeführt, sowie vom Multiplizierer 32 quadriert. Die Ausgangsspannung des Dividierers 33 stellt den $\tan\gamma_R$ dar und wird vom Funktionsbildner 36 über die arctan-Funktion in den Winkel $\gamma_R$ umgeformt. Die Ausgangsspannungen der beiden Multiplizierer 31 und 33 werden vom Summierverstärker 34 addiert, dessen Ausgangsspannung die Quadratsumme der eingangsseitigen Winkelkomponenten darstellt. Durch den Radizierer 35 wird hieraus der Betrag von $U_R$ gebildet. Der Koordinatenwandler 18 setzt somit eine in kartesischen Koordinaten vorgegebene Grösse in Polarkoordinaten um.

Fig. 8 zeigt den prinzipiellen Schaltungsaufbau einer weiteren Ausführungsform eines Koordinatenwandlers 18 in Fig. 4. Der hier dargestellte Koordinatenwandler enthält die Dividierer 37, 38 und 42, zwei als Quadrierer geschaltete Multiplizierer 39 und 40, zwei Summierverstärker 41 und 44, einen PI-Regler 45 und einen Funktionsgeber 43, der die arctan-Funktion nachbildet. Die eingangsseitige Winkelkomponente $\hat{u}_R \cdot \sin\gamma_R$ wird dem Dividendeneingang des Dividierers 37 zugeführt, dessen Divisoreingang mit der Amplitude $|\hat{u}_R|$ der Ausgangswechselspannung beaufschlagt ist. Die Ausgangsspannung des Dividierers 37 stellt den $\sin\gamma_R$ dar. Die eingangsseitige Winkelkomponente $\hat{u}_R \cdot \cos\gamma_R$ wird dem Dividendeneingang des Dividierers 38 zugeführt, dessen Divisoreingang ebenfalls von der Amplitude $|\hat{u}_R|$ der Ausgangswechselspannung beaufschlagt ist. Die Ausgangsspannung des Dividierers 38 bildet den $\cos\gamma_R$. Der $\sin\gamma_R$ wird dem Dividendeneingang des Dividierers 42 zugeführt. Der $\cos\gamma_R$ wird dem Divisoreingang des Dividierers 42 zugeführt. Die Ausgangsspannung des Dividierers 42, die den $\tan\gamma_R$ darstellt, wird im Funktionsgeber 43 über die arctan-Funktion in den Winkel $\gamma_R$ umgeformt. In den Multiplizierern 39 und 40 und dem Summierverstärker 41 für die Ausgangsspannungen der Multiplizierer 39 und 40 wird die Quadratsumme der Winkelkomponenten $\sin\gamma_R$ und $\cos\gamma_R$ gebildet. Im Summierverstärker 44 wird hiervon eine Spannung mit dem Wert −1 abgezogen. Die Ausgangsspannung des Summierverstärkers 44 wird dem PI-Regler 45 zugeführt, dessen Ausgangsspannung die Grösse $|\hat{u}_R|$ darstellt.

Fig. 9 zeigt eine vereinfachte Ausführungsform eines Koordinatenwandlers 18, der Näherungswerte liefert, die hinreichend genau sind unter der Voraussetzung, dass der Sollwert für den Winkel $\gamma_R^* = 0$ ist und dass der Sollwert für die Amplitude der Ausgangswechselspannung konstant ist. Diese vereinfachte Ausführungsform eines derartigen Koordinatenwandlers besteht aus einem als Quadrierer geschalteten Multiplizierer 46, einem Proportionalverstärker 47 und einem Summierverstärker 48. Im Multiplizierer 46 wird das Quadrat der eingangsseitigen Winkelkomponente $\hat{u}_R \cdot \sin\gamma_R$ gebildet und im Proportionalverstärker 47 mit dem Faktor 1/2 gewichtet. Die Ausgangsspannung des Proportionalverstärkers 47 wird im Summierverstärker 48 zu der anderen Winkelkomponente $\hat{u}_R \cdot \cos\gamma_R$ der Ausgangswechselspannung addiert. Die Ausgangsspannung des Summierverstärkers 48 entspricht einem Näherungswert für die Grösse $|U_R|$. Die Winkelkomponente $\hat{u}_R \cdot \sin\gamma_R$ der Ausgangswechselspannung wird unmittelbar als Näherungswert für $\gamma_R$ verwendet.

Fig. 10 zeigt das Prinzip eines digitalen Vektoroszillators 8. Der Vektoroszillator 8 enthält einen Zähler 51, der von einem Taktgeber 50 mit der Taktfrequenz f angesteuert wird. Der Zählerstand des Zählers 51 dient zur fortlaufenden Adressierung einer Anzahl von Festwertspeichern 52 bis 57, in denen die Winkelfunktionen für die Referenzvektoren $\underline{r}$, $\underline{s}$, $\underline{t}$ gespeichert sind. Die Winkelfunktionen können entweder in digitaler Form weiterverarbeitet werden oder durch Digital-Analog-Wandler in analoge Grösse umgeformt werden. Die Schaltung eines derartigen Vektoroszillators lässt sich unter Ausnutzung der bereichsweisen Übereinstimmung der Winkelfunktionen vereinfachen.

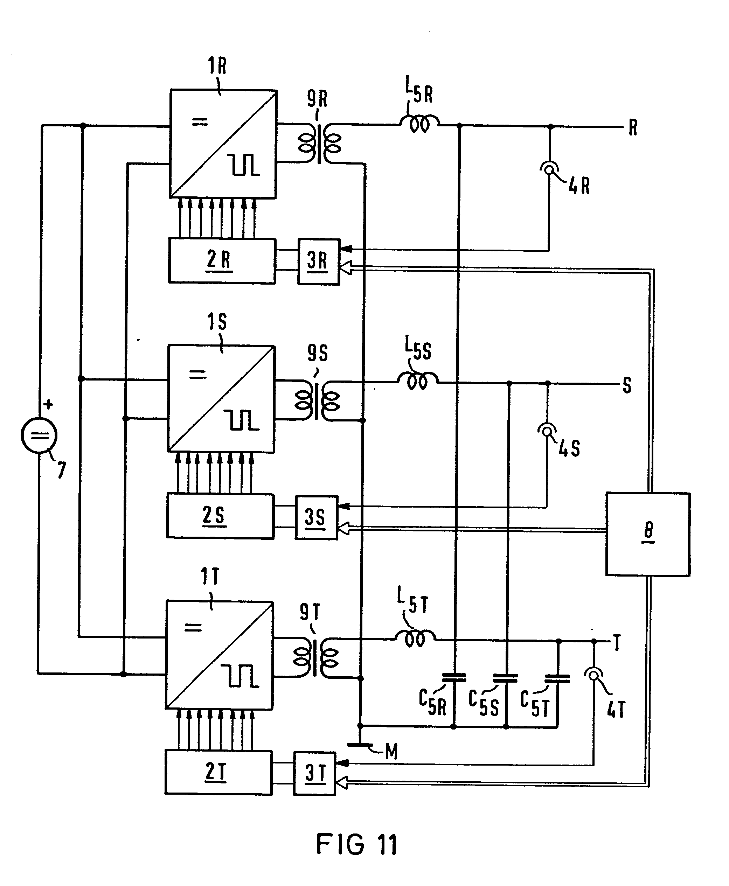

Fig. 11 zeigt eine Wechselrichteranordnung, bei der die Einphasen-Wechselrichter 1R, 1S, 1T ausgangsseitig an die wechselrichterseitigen Wicklungen einer Tranformatoranordnung angeschlossen sind. Die Tiefpassfilter sind netzseitig angeordnet. Das Tiefpassfilter für die Phase R enthält die Induktivität $L_{5R}$ und die Kapazität $C_{5R}$. Für die Phase S ist ein Tiefpassfilter mit $L_{5S}$, $C_{5S}$ und für die Phase T ein Tiefpassfilter mit $L_{5T}$, $C_{5T}$ vorgesehen. Bei dieser Ausführungsform wird die Transformatoranordnung bei Schieflast nicht mit einem symmetrischen Spannungssystem gespeist. Die Transformatoranordnung wird mit den pulsförmigen Wechselrichterausgangsspannungen belastet, so dass zusätzliche Eisenverluste und Kupferzusatzverluste durch Oberschwingungen entstehen. Durch entsprechende Auslegung der Streuinduktivität der Transformatoranordnung ist es möglich, die für die Tiefpassfilter jeweils benötigte Iduktivität ganz oder zumindest teilweise durch die Streuinduktivität der Transformatoranordnung zu ersetzen.

In der Darstellung der Fig. 11 ist die Transformatoranordnung aus drei Einphasentransformatoren 9R, 9S, 9T aufgebaut, deren netzseitige Wicklungen in Stern geschaltet und sternpunktseitig geerdet sind. Es ist jedoch auch möglich, einen Drehstromtransformator mit einem Fünfschenkelkern zu verwenden.

Die Bildung der Betragssteuerspannungen und Phasensteuerspannungen für die Einphasen-Wechselrichter erfolgt in der bereits beschriebenen Weise.

**Patentansprüche**

1. Wechselrichteranordnung zur Erzeugung einer dreiphasigen Ausgangswechselspannung mit drei selbstgeführten einphasigen Wechselrichtern (1R, 1S, 1T), die eingangsseitig parallel an einer gemeinsamen Gleichspannungsquelle (7) liegen und ausgangsseitig an Tiefpassfilter (5R, 5S, 5T) und an eine Transformatoranordnung angeschlossen sind, gekennzeichnet durch folgende Merkmale:
a) Zur Bildung der dreiphasigen Ausgangswechselspannung (R, S, T) sind entweder die Einphasen-Wechselrichter (1R, 1S, 1T) jeweils über ein wechselrichterseitiges Tiefpassfilter (5R, 5S, 5T) an eine dreiphasige Transformatoranordnung (6R, 6S, 6T) angeschlossen (Fig. 1) oder die Einphasen-Wechselrichter (1R, 1S, 1T) sind über eine dreiphasige Transformatoranordnung (9R, 9S, 9T) an jeweils ein netzseitiges Tiefpassfilter ($L_{5R}$, $C_{5R}$; $L_{5S}$, $C_{5S}$; $L_{5T}$, $C_{5T}$) angeschlossen (Fig. 11), wobei in beiden Fällen die netzseitigen Wicklungen der Transformatoranordnung in einer Sternschaltung mit herausgeführtem Sternpunkt (M) angeordnet sind,
b) jeder Einphasen-Wechselrichter (1R, 1S, 1T) wird jeweils von einer eigenen Pulssteuereinrichtung mit einer vektororientierten Regeleinrichtung (3R, 3S, 3T) und einem Steuersatz (2R, 2S, 2T) mit Zündimpulsen gesteuert,
c) es ist ein Vektoroszillator (8) zur Erzeugung eines dreiphasigen symmetrischen Systems von Referenzvektoren ($\underline{r}$, $\underline{s}$, $\underline{t}$) vorgesehen,
d) die vektororientierten Regeleinrichtungen (3R, 3S, 3T), denen jeweils als Führungsgrösse ein vom Vektoroszillator (8) erzeugter Referenzvektor und als Regelgrösse ein aus dem Messwert der Ausgangswechselspannung der zugehörigen Phase ermittelter Vektor [$\hat{u}_R \cdot \cos(x \pm \gamma_R)$; $\hat{u}_R \cdot \sin(x \pm \gamma_R)$] der Ausgangsspannung zugeführt wird, ermitteln eine Betragssteuerspannung und eine Phasensteuerspannung für die zugehörigen Steuersätze (2R, 2S, 2T) in der Weise, dass der Phasenspannungsvektor in Übereinstimmung mit dem jeweiligen Führungsvektor gehalten wird (Fig. 1).

2. Wechselrichteranordnung nach Anspruch 1, gekennzeichnet durch eine vektororientierte Regeleinrichtung (3Ra) mit folgenden Merkmalen:
e) einen Vektoridentifizierer (11), der aus der jeweiligen gemessenen Ausgangswechselspannung die orthogonale Komponente des Vektors der Ausgangsspannung ermittelt,
f) einen Vektordreher (10), der aus den Komponenten des Vektors der Ausgangsspannung und den Komponenten des Referenzvektors ($\underline{r}$) die in Richtung des Referenzvektors ($\underline{r}$) liegende Längskomponente ($\hat{u}_R \cdot \cos\gamma_R$) und die zugehörige Querkomponente ($\hat{u}_R \cdot \sin\gamma_R$) ermittelt und als Regelgrössen für einen Längsspannungsregler (12) und einen Querspannungsregler (13) vorgibt,
g) einen Koordinatenwandler (14), der die Ausgangssignale des Längsspannungsreglers (12) und des Querspannungsreglers (13) in die Betragssteuerspannung und die Phasensteuerspannung umsetzt (Fig. 3).

3. Wechselrichteranordnung nach Anspruch 1, gekennzeichnet durch eine vektororientierte Regeleinrichtung (3Rb) mit folgenden Merkmalen:
h) einen Vektoridentifizierer (17) der aus der jeweiligen gemessenen Ausgangswechselspannung die orthogonale Komponente des Vektors der Ausgangsspannung ermittelt,
i) einen Vektordreher (16), der aus den Komponenten des Vektors der Ausgangswechselspannung und den Komponenten des Referenzvektors ($\underline{r}$) die in Richtung des Referenzvektors ($\underline{r}$) liegende Längskomponente ($\hat{u}_R \cdot \cos\gamma_R$) und die zugehörige Querkomponente ($\hat{u}_R \cdot \sin\gamma_R$) ermittelt und diese Komponenten als Regelgrössen in kartesischen Koordinaten einem Koordinatenwandler (18) zuführt;
j) der Koordinatenwandler (18) bildet aus den Regelgrössen in kartesischen Koordinaten Regelgrössen in Polarkoordinaten für einen Winkelregler (19) und einen Betragsregler (20, deren Ausgangssignale die Phasensteuerspannung und die Betragssteuerspannung bilden (Fig. 4).

**Claims**

1. An inverter rectifier arrangement for the production of a three-phase alternating output voltage, with three self-controlled one-phase inverter rectifiers (1R, 1S, 1T) whose inputs are connected in parallel to a common direct voltage source (7) and whose outputs are connected to low-pass filters (5R, 5S, 5T) and a transformer arrangement, characterised by the following features:
a) in order to produce the three-phase alternating output voltage (R, S, T) either the one-phase inverter rectifiers (1R, 1S, 1T) are each conncected by a respective low-pass filter (5R, 5S, 5T) to a three-phase transformer arrangement (6R, 6S, 6T) at the end of the inverter rectifier, or the one-phase inverter rectifiers (1R, 1S, 1T) are each connected to a respective low-pass filter ($L_{5R}$, $C_{5R}$; $L_{5S}$, $C_{5S}$; $L_{5T}$, $C_{5T}$) in the network output by means of a three-phase transformer arrangement (9R, 9S, 9T), (Fig. 11), where in both cases the windings of the tranformer arrangement at the network output are arranged in a start connection with a free star point (M),
b) each one-phase inverter rectifier (1R, 1S, 1T) is controlled by a separate pulse control device having a vector oriented regulating device (3R, 3S, 3T) and by a control unit (2R, 2S, 2T) producing firing pulses,
c) a vector oscillator (8) is provided to produce a symmetrical three-phase system of reference vectors ($\underline{r}$, $\underline{s}$, $\underline{t}$),
d) the vector-oriented regulating devices (3R, 3S, 3T) are each supplied with a reference vector produced by the vector oscillator (8) as a command variable, and with a vector [$\hat{u}_R \cdot \cos(x \pm \gamma_R)$; $\hat{u}_R \cdot \sin(x \pm \gamma_R)$] of the output voltage which is determined from the measured value of the alternating output voltage of the assigned phase to serve as a regulating variable, and the devices determine a value control voltage and a phase control voltage for the assigned control units (2R, 2S, 2T) in such a manner that the phase voltage vector is maintained so as to coincide with the respective command vector (Fig. 1).

2. An inverter rectifier arrangement as claimed in Claim 1, characterised by a vector-oriented regulating device (3Ra) which has the following features:

e) a vector identifier (11) which determines the orthogonal component of the vector of the output voltage from the respective measured alternating output voltage,

f) a vector turner (10) which determines the longitudinal component ($\hat{u}_R \cdot \cos\gamma_R$), which is arranged in the direction of the reference vector ($\underline{r}$), and the assigned transverse component ($\hat{u}_R \cdot \sin\gamma_R$) from the components of the vector of the output voltage and the components of the reference vector ($\underline{r}$) and specifies them as regulating variables for a longitudinal voltage regulator (12) and a transverse voltage regulator (13),

g) a coordinate converter (14) which converts the output signals of the longitudinal voltage regulator (12) and of the transverse voltage regulator (13) into the value control voltage and the phase control voltage (Fig. 3).

3. An inverting rectifier arrangement as claimed in Claim 1, characterised by a vector-oriented regulating device (3Rb) having the following features:

h) a vector identifier (17) which determines the orthogonal component of the vector of the output voltage from the respective measured alternating output voltage,

i) a vector turner (16) which determines the longitudinal component ($\hat{u}_R \cdot \cos\gamma_R$), which is arranged in the direction of the reference vector ($\underline{r}$), and the assigned transverse component ($\hat{u}_R \cdot \sin\gamma_R$) from the components of the vector of the alternating output voltage and the components of the reference vector ($\underline{r}$) and supplies these components to a coordinate converter (18) as regulating variables in Cartesian Coordinates;

j) the coordinate converter (18) forms regulating variables in polar coordinates for an angle regulator (19) from the regulating variables in Cartesian coordinates, and forms a value regulator (20) whose output signals form the phase control voltage and the value control voltage (Fig. 4).

**Revendications**

1. Dispositif onduleur pour la production d'une tension alternative de sortie triphasée, comportant trois onduleurs monophasés à commutation automatique (1R, 1S, 1T), qui sont montés, du côté entrée, en parallèle avec une source commune de tension continue (7) et son raccordés, du côté sortie, à des filtres passe-bas (5R, 5S, 5T) et à un dispositif transformateur, caractérisé par les caractéristiques suivantes:

a) pour la formation de la tension alternative de sortie triphasée (R, S, T), soit les onduleurs monophasés (1R, 1S, 1T) sont raccordés par l'intermédiaire de filtres passe-bas respectifs (5R, 5S, 5T) situés du côté onduleur, à un dispositif transformateur triphasé (6R, 6S, 6T) (fig. 1), soit les onduleurs monophasés (1R, 1S, 1T) sont raccordés par l'intermédiaire d'un dispositif transformateur triphasé (9R, 9S, 9T) aux filtres passe-bas respectifs ($L_{5R}$, $C_{5R}$; $L_{5S}$, $C_{5S}$; $L_{5T}$, $C_{5T}$) situés du côté réseau (fig. 11), les enroulements, situés du côté réseau, du dispositif transformateur étant dans les deux cas disposés selon un montage étoile avec le point neutre (M) ressorti,

b) chaque onduleur monophasé (1R, 1S, 1T) est commandé par un dispositif particulier de commande impulsionnelle comportant un dispositif de réglage à action vectorielle (3R, 3S, 3T) et un ensemble de commande (2R, 2S, 2T), par des impulsions d'amorçage,

c) il est prévu un oscillateur (8) générant des vecteurs, servant à produire un système triphasé symétrique de vecteurs de référence ($\underline{r}$, $\underline{s}$, $\underline{t}$),

d) les dispositifs de réglage à action vectorielle (3R, 3S, 3T), à chacun desquels sont envoyées comme grandeur de commande un vecteur référence produit par l'oscillateur (8) générant des vecteurs, et comme grandeur réglée un vecteur [$\hat{u}_R \cdot \cos(x \pm \gamma_R)$; $\hat{u}_R \cdot \sin(x \pm \gamma_R)$] de la tension de sortie, déterminé à partir de la valeur de mesure de la tension alternative de sortie, déterminent une tension de commande de la valeur et une tension de commande de la phase pour les ensembles de commande associés (2R, 2S, 2T) de telle manière que le vecteur de la tension de phase est maintenu en coïncidence avec le vecteur respectif de commande (fig. 1).

2. Dispositif onduleur selon la revendication 1, caractérisé par un dispositif de réglage (3Ra) à action vectorielle présentant les caractéristiques suivantes:

e) un identificateur de vecteurs (11) qui détermine, à partir de la tension alternative de sortie respective mesurée, la composante orthogonale du vecteur de la tension de sortie,

f) un dispositif (10) de déplacement en rotation des vecteurs, qui, à partir des composantes du vecteur de la tension de sortie et des composantes du vecteur de référence ($\underline{r}$), détermine la composante longitudinale ($\hat{u}_R \cdot \cos\gamma_R$) située suivant la direction du vecteur de référence ($\underline{r}$) et la composante transversale associée ($\hat{u}_R \cdot \sin\gamma_R$) et prédétermine ces composantes en tant que grandeurs réglées pour un régulateur (12) de la composante longitudinale de la tension et un régulateur (13) de la composante transversale de la tension,

g) un convertisseur de coordonnées (14) qui convertit les signaux de sortie du régulateur (12) de la composante longitudinale de la tension et du régulateur (13) de la composante transversale de la tension en la tension de commande de la valeur et en la tension de commande de la phase (fig. 3).

3. Dispositif onduleur selon la revendication 1, caractérisé par un dispositif de régulation (3Rb) à action vectorielle présentant les caractéristiques suivantes:

h) un identificateur de vecteurs (17) qui détermine, à partir de la tension alternative de sortie respective mesurée, la composante orthogonale du vecteur de la tension de sortie,

i) un dispositif (16) de déplacement en rotation des vecteurs, qui, à partir des composantes des vecteurs de la tension alternative de sortie et des composantes du vecteur de référence $(\underline{r})$, détermine la composante longitudinale $(\hat{u}_R \cdot \cos\gamma_R)$ située suivant la direction du vecteur de référence $(\underline{r})$ et la composante transversale associée $(\hat{u}_R \cdot \sin\gamma_R)$ et envoie ces composantes en tant que grandeurs réglées en coordonnées cartésiennes à un convertisseur de coordonnées (18),

j) le convertisseur de coordonnées (18) forme, à partir des grandeurs réglées en coordonnées cartésiennes, des grandeurs de réglage en coordonnées polaires pour un régulateur d'angle (19) et un régulateur de valeur (20), dont les signaux de sortie forment la tension de commande de la phase et la tension de commande de la valeur (fig. 4).

FIG 1

FIG 2

FIG 3

FIG 4

FIG 5

FIG 6

FIG 7

FIG 8

FIG 9

FIG 10

FIG 11